(19) **Europäisches Patentamt / European Patent Office / Office européen des brevets**

(11) **EP 4 329 035 A1**

(12) **EUROPEAN PATENT APPLICATION**
published in accordance with Art. 153(4) EPC

(43) Date of publication:
**28.02.2024 Bulletin 2024/09**

(21) Application number: **22904681.8**

(22) Date of filing: **08.12.2022**

(51) International Patent Classification (IPC):
**H01M 10/0565** (2010.01)

(52) Cooperative Patent Classification (CPC):
**H01M 10/0565;** Y02E 60/10

(86) International application number:
**PCT/KR2022/019898**

(87) International publication number:
**WO 2023/106852 (15.06.2023 Gazette 2023/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.12.2021 KR 20210174993**
**07.12.2022 KR 20220169870**

(71) Applicant: **LG Energy Solution, Ltd.**
**Seoul 07335 (KR)**

(72) Inventors:
• **LEE, Jung Pil**
  **Daejeon 34122 (KR)**
• **HAN, Hyeaeun**
  **Daejeon 34122 (KR)**
• **KIM, Dong Kyu**
  **Daejeon 34122 (KR)**
• **HWANG, Sunwook**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **SOLID ELECTROLYTE AND METHOD FOR PRODUCING SAME**

(57) The present invention pertains to a solid electrolyte and a method for producing same. More specifically, the solid electrolyte contains a mixed conductive polymer having ionic conductivity and electrical conductivity properties and a lithium salt in an appropriate range, and thus both the ionic conductivity and electrical conductivity properties of the solid electrolyte can be improved.

FIG. 1

EP 4 329 035 A1

**Description**

**Technical Field**

This application claims the benefit of priority based on Korean Patent Application No. 2021-0174993 filed on December 08, 2021 and Korean Patent Application No. 2022-0169870 filed on December 07.
One aspect of the present disclosure relates to a solid electrolyte and a method for preparing the same.

**Background Art**

In terms of the capacity, safety, output, enlargement, microminiaturization, etc. of the batteries, various batteries that can overcome the limitations of current lithium secondary batteries are being studied.
Typically, continuous research is being conducted on a metal-air battery with a very large theoretical capacity, an all-solid battery with no risk of explosion, a supercapacitor with high output, a NaS battery or redox flow battery (RFB) to increase size, a thin film battery to decrease size, etc. compared to a current lithium secondary battery.
Among them, the all-solid battery means a battery in which the liquid electrolyte used in the existing lithium secondary battery is replaced with a solid electrolyte, and since the all-solid battery does not use a flammable solvent in the battery, there is no ignition or explosion caused by the decomposition reaction of the conventional electrolyte solution, and safety can be greatly improved. In addition, in the case of the all-solid battery, since Li metal or Li alloy can be used as a material for the negative electrode, there is an advantage that the energy density relative to the mass and volume of the battery can be significantly improved.
As such, the all-solid battery has the advantage of improved safety compared to batteries using conventional liquid electrolytes, there is a limit to the extent to which the energy density and lifetime of the all-solid battery can be improved by using a commercially available solid electrolyte because it is not easy to simultaneously secure the ionic conductivity and electrical conductivity of the solid electrolyte contained in the all-solid battery.
Accordingly, there is a need to develop a solid electrolyte that has both ionic conducting and electrical conducting characteristics to the extent required for the all-solid battery.

**Related Art**

US Patent Application Publication No. 2021-0050596

**Summary**

As a result of various studies to solve the above problems, the inventors of one aspect of the present disclosure confirmed that a solid electrolyte having excellent electrical conductivity and ionic conductivity can be prepared by using a conducting polymer with ionic conducting and electrical conducting characteristics and a lithium salt and controlling the amounts of these components to be within the appropriate content range.
Therefore, it is an objective of one aspect of the present disclosure to provide a solid electrolyte having excellent electrical conductivity and ionic conductivity and a method for preparing the same.
It is another object of one aspect of the present disclosure to provide an all-solid battery comprising the electrode.
In order to achieve the above objective, one aspect of the present disclosure provides a solid electrolyte comprising a conducting polymer with ionic conducting and electrical conducting characteristics and a lithium salt.
The conducting polymer may comprise one or more selected from the group consisting of poly(3,4-ethylenedioxythiophene): poly(styrenesulfonate)(PEDOT:PSS), polyacetylene, poly(*para*-phenylene), poly(para-phenylene sulfide), polythiophene, polypyrrole, polyisothianaphtalene, poly(para-phenylene vinylene), polyaniline, and poly(3,4-ethylenedioxythiophene).
The lithium salt may comprise one or more selected from the group consisting of LiTFSI(Lithium bis(trifluoromethanesulphonyl)imide), LiFSI(Lithium bis(fluorosulfonyl)imide), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN, $LiC(CF_3SO_2)_3$, $(CF_3SO_2)_2Nli$ and $(FSO_2)_2Nli$.
The solid electrolyte may comprise 5 to 300 parts by weight of the lithium salt relative to 100 parts by weight of the conducting polymer.
The solid electrolyte may comprise 100 to 300 parts by weight of the lithium salt relative to 100 parts by weight of the conducting polymer.
The solid electrolyte may have a form of a matrix of the conducting polymer and the lithium salt dissociated inside the matrix.
The solid electrolyte may have a form of a solid electrolyte film.

The solid electrolyte may have the thickness of 10 to 60 $\mu$m.

Another aspect of the present disclosure also provides a method for preparing a solid electrolyte, comprising the steps of (S1) mixing a conducting polymer, a lithium salt, and a solvent to prepare a mixed solution; (S2) coating the mixed solution on a substrate to form a coating layer; and (S3) drying the coating layer.

The coating may be carried out by bar coating, roll coating, spin coating, slit coating, die coating, blade coating, comma coating, slot die coating, lip coating, or solution casting.

The drying may be carried out at 300 °C or less.

The substrate may be stainless steel, polyethylene terephthalate film, polytetrafluoroethylene film, polyethylene film, polypropylene film, polybutene film, polybutadiene film, vinyl chloride copolymer film, polyurethane film, ethylene-vinyl acetate, ethylene-propylene copolymer film, ethylene-ethyl acrylate copolymer film, ethylene-methyl acrylate copolymer film, or polyimide film.

The solvent may be one or more selected from the group consisting of dimethylsulfoxide (DMSO), isopropyl alcohol, N-methylpyrrolidone (NMP), acetone, xylene, N,N-Dimethylmethanamide (DMF), benzene, tetrahydrofuran (THF), and water.

The other aspect of the present disclosure provides an electrode for an all-solid battery, the electrode may include a coating layer comprising the solid electrolyte formed thereon.

The electrode may be a positive electrode or a negative electrode.

The other aspect of the present disclosure also provides an all-solid battery comprising the electrode.

As the solid electrolyte according to one aspect of the present disclosure contains a conducting polymer and a lithium salt, both electrical conductivity and ionic conductivity may be secured.

In addition, by controlling the content ratio of the conducting polymer and the lithium salt, it is possible to control the electrical conductivity and ionic conductivity of the solid electrolyte.

**Brief Description of Drawings**

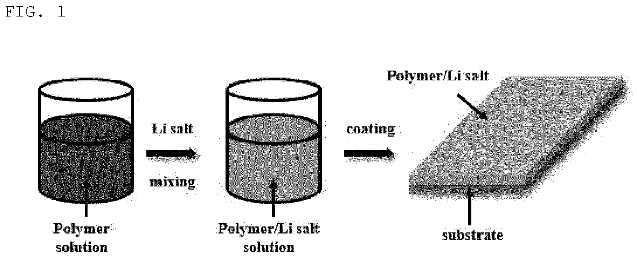

FIG. 1 is an illustration of a process for preparing a solid electrolyte according to an example of one aspect of the present disclosure.

**Detailed Description**

Hereinafter, the present disclosure will be described in more detail to help with understanding of the present disclosure.

The terms and words used in the present specification and claims should not be construed as limited to ordinary or dictionary terms, and should be construed in a sense and concept consistent with the technical idea of the present disclosure, based on the principle that the inventor can properly define the concept of a term to describe his invention in the best way possible.

**Solid electrolyte**

One aspect of the present disclosure relates to a solid electrolyte.

The solid electrolyte according to one aspect of the present disclosure comprises a conducting polymer and a lithium salt.

The solid electrolyte has a form in which lithium salt is dissociated in a matrix formed by a conducting polymer, and thus the cation and anion of the lithium salt are present in a dissociated state.

In the one aspect of the present disclosure, the conducting polymer has mixed conducting characteristics comprising ionic conductivity and electronic conductivity, and thus may serve as a conductive material to move electrons and as an electrolyte to move lithium ions at the same time.

The conducting polymer may comprise one or more selected from the group consisting of poly(3,4-ethylenedioxythiophene):poly(styrenesulfonate)(PEDOT:PSS), polyacetylene, poly(*para*-phenylene), poly(*para*-phenylene sulfide), polythiophene, polypyrrole, polyisothianaphtalene, poly(*para*-phenylene vinylene), polyaniline, and poly(3,4-ethylenedioxythiophene).

For example, the conducting polymer may be poly(3,4-ethylenedioxythiophene): poly(styrenesulfonate) (PEDOT: PSS), and the weight ratio of PEDOT and PSS in the PEDOT: PSS may be 1: 1 to 4, 1: 1.5 to 3.5, 1: 2 to 3, or 1: 2.5.

In one aspect of the present disclosure, the lithium salt dissociates in the conducting polymer matrix, and thus can serve as a lithium source allowing lithium ions to be present.

The lithium salt may comprise one or more selected from the group consisting of LiTFSI(lithium bis(trifluoromethanesulphonyl)imide), LiFSI(Lithium bis(fluorosulfonyl)imide), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN, $LiC(CF_3SO_2)_3$, $(CF_3SO_2)_2NLi$,

and $(FSO_2)_2NLi$.

In addition, the lithium salt may be contained in an amount of 5 to 300 parts by weight relative to 100 parts by weight of the conducting polymer. Specifically, the content of the lithium salt may be 5 parts by weight or more, 10 parts by weight or more, 20 parts by weight or more, 30 parts by weight or more or 40 parts by weight or more, 50 parts by weight or more, 70 parts by weight or more or 100 parts by weight or more, and 120 parts by weight or less, 130 parts by weight or less, 140 parts by weight or less, 150 parts by weight or less, 200 parts by weight or less or 250 parts by weight or less or 300 parts by weight or less. If the amount of the lithium salt is less than 5 parts by weight, the ionic conductivity may be significantly reduced because of the small amount of the available lithium. If the amount of the lithium salt exceeds 300 parts by weight, the ionic conductivity may be reduced because excess lithium salt that has not been dissociated may be precipitated in the mixed conducting polymer.

In one aspect of the present disclosure, the solid electrolyte has the form of a solid electrolyte film, and may be used as an electrolyte for an all-solid battery or applied to an electrode. When the solid electrolyte is applied to the electrode, it may be formed on or inside the active material layer of the positive electrode or the negative electrode.

In one aspect of the present disclosure, the solid electrolyte may have the thickness of 10 to 60 $\mu$m. Specifically, the thickness of the solid electrolyte may be 10 $\mu$m or more, 15 $\mu$m or more, 20 $\mu$m or more, and may be 40 $\mu$m or less, 50 $\mu$m or less, 60 $\mu$m or less. If the thickness of the solid electrolyte is less than 10 $\mu$m, the strength may be weakened, and the thickness of the solid electrolyte exceeds 60 $\mu$m, the energy density may be decreased.

**Method for preparing solid electrolyte**

Another aspect of the present disclosure also relates to a method for preparing a solid electrolyte, wherein the method for preparing a solid electrolyte comprises the steps of (S1) mixing a conducting polymer, a lithium salt, and a solvent to prepare a mixed solution, (S2) coating the mixed solution on a substrate to form a coating layer; and (S3) drying the coating layer.

Hereinafter, each step of the method for preparing a solid electrolyte according to another aspect of the present disclosure will be described in more detail for each step.

In another aspect of the present disclosure, in the step (S2), a mixed solution containing a conducting polymer and lithium salt may be coated on a substrate. The type and amount of the conducting polymer and lithium salt are the same as described above.

FIG. 1 illustrates a process for forming a coating layer on a substrate according to an example of another aspect of the present.

As illustrated in FIG. 1, the conducting polymer is dissolved in a solvent to prepare a conducting polymer solution (polymer solution), and then, the lithium salt (Li salt) is mixed to obtain a mixed solution (polymer/Li salt solution).

The mixing may be performed until the mixed solution is uniformly visible to the naked eye. For example, the mixing may be performed for 8 to 16 hours, specifically, the mixing time may be 8 hours or more, 9 hours or more, or 10 hours or more, and 14 hours or less, 15 hours or less, or 16 hours or less. If the mixing time is less than 8 hours, the mixed solution cannot be uniform, and if the mixing time is greater than 16 hours, the uniformity of the mixed solution does not change significantly even if the mixing time is increased, so the process efficiency may be lowered.

In addition, the solvent is not particularly limited as long as it dissolves and/or disperses the conducting polymer and the lithium salt to form a solution. For example, the solvent may be one or more selected from the group consisting of dimethylsulfoxide (DMSO), isopropyl alcohol, N-methylpyrrolidone (NMP), acetone, xylene, N,N-Dimethylmethanamide (DMF), benzene, tetrahydrofuran (THF), and water. The amount of the solvent used may be adjusted in consideration of the coating thickness of the coating layer and the physical properties of the solid electrolyte to be prepared.

In addition, the concentration of the mixed solution is not particularly limited as long as it can perform the coating process. For example, the concentration of the mixed solution may be 0.5% to 30%, specifically, 0.5% or more, 1% or more, or 3% or more, or may be 10% or less, 20% or less, or 30% or less. If the concentration of the mixed solution is less than 0.5%, the resulting coating layer may be too thin. If the concentration of the mixed solution exceeds 30%, it may be difficult to uniformly form a coating layer.

The coating method may be bar coating, roll coating, spin coating, slit coating, die coating, blade coating, comma coating, slot die coating, lip coating, or solution casting, but is not limited thereto as long as it is a coating method capable of forming a coating layer on the substrate.

In addition, the substrate is not particularly limited as long as it is a substrate that can be used to form the coating layer. For example, the substrate may be stainless steel, polyethylene terephthalate film, polytetrafluoroethylene film, polyethylene film, polypropylene film, polybutene film, polybutadiene film, vinyl chloride copolymer film, polyurethane film, ethylene-vinyl acetate film, ethylene-propylene copolymer film, ethylene-ethyl acrylate copolymer film, ethylene-methyl acrylate copolymer film, or polyimide film.

In another aspect of the present, in step (S3), the coating layer obtained in step (S2) may be dried.

The drying is not particularly limited as long as it is a drying method capable of forming a layer by evaporating the solvent contained in the coating layer. For example, the drying may be performed at 300°C or less. Specifically, the drying temperature may be 300°C or less, 200°C or less, 150°C or less, or 100°C or less. The drying temperature may vary depending on the type of solvent and drying conditions. For example, vacuum drying may be performed at 100°C or less. In addition, when the solvent is acetone or alcohol, it may be performed at 100°C or less. If the drying temperature exceeds 300°C, the solid electrolyte may be thermally decomposed. The lower limit of the drying temperature is not particularly limited, but may be, for example, 60°C or higher.

In another aspect of the present, the process may further comprise step (S4), which is performed after the drying step (S3). In step (S4), the coating layer is separated from the substrate to obtain a solid electrolyte.

**Electrode for all-solid battery and all-solid battery comprising same**

The other aspect of the present disclosure also relates to an electrode for an all-solid battery formed with a coating layer comprising the solid electrolyte. The electrode may be a positive electrode or a negative electrode.

In the other aspect of the present disclosure, the positive electrode may comprise a positive electrode active material layer and a coating layer including the solid electrolyte, which is formed on a surface of the positive electrode active material layer. The coating layer may be formed by attaching the solid electrolyte to the positive electrode active material layer, or may be formed by a coating method which is a conventional method known in the art. For example, the coating method may be bar coating, roll coating, spin coating, slit coating, die coating, blade coating, comma coating, slot die coating, lip coating, or solution casting, but is not limited thereto as long as it is a coating method capable of forming a coating layer. The coating layer may be in a form of a slid electrolyte film.

In addition, a positive electrode current collector may be further formed on the other surface of the positive electrode active material layer. The positive electrode current collector and the positive active material are not particularly limited as long as those are conventionally used in the all-solid battery.

The positive electrode active material layer comprises a positive electrode active material, a binder, and an electrically conductive material.

In addition, the positive electrode active material is not particularly limited as long as it is a material capable of reversibly intercalating and de-intercalating lithium ions, and for example, may be, but is not limited to, layered compounds or compounds substituted with one or more transition metals, such as lithium cobalt oxide ($LiCoO_2$), lithium nickel oxide ($LiNiO_2$), $Li[Ni_xCo_yMn_zM_v]O_2$ (wherein, M is any one or two or more elements selected from the group consisting of Al, Ga and In; $0.3 \leq x < 1.0$, $0 \leq y$, $z \leq 0.5$, $0 \leq v \leq 0.1$, $x+y+z+v=1$), $Li(Li_aM_{b-a-b}\,M'_{b'})\,O_{2-c}A_c$ (wherein, $0 \leq a \leq 0.2$, $0.6 \leq b \leq 1$, $0 \leq b' \leq 0.2$, $0 \leq c \leq 0.2$; M comprises Mn and at least one selected from the group consisting of Ni, Co, Fe, Cr, V, Cu, Zn and Ti; M' is at least one selected from the group consisting of Al, Mg and B, and A is at least one selected from the group consisting of P, F, S and N) ; lithium manganese oxide such as Formula $Li_{1+y}Mn_{2-y}O_4$ (wherein, y is 0 to 0.33), $LiMnO_3$, $LiMn_2O_3$, $LiMnO_2$; lithium copper oxide ($Li_2CuO_2$) ; vanadium oxide such as $LiV_3O_8$, $LiFe_3O_4$, $V_2O_5$, $Cu_2V_2O_7$; Ni site type lithium nickel oxide represented by Formula $LiNi_{1-y}MyO_2$ (wherein, M is Co, Mn, Al, Cu, Fe, Mg, B or Ga, y is 0.01 to 0.3); lithium manganese composite oxide represented by Formula $LiMn_{2-y}M_yO_2$ (wherein, M is Co, Ni, Fe, Cr, Zn or Ta, y is 0.01 to 0.1), or $Li_2Mn_3MO_8$ (wherein, M is Fe, Co, Ni, Cu or Zn); $LiMn_2O_4$ in which part of Li in the Formula is substituted with alkaline earth metal ions; disulfide compounds, and $Fe_2(MoO_4)_3$.

In addition, the positive electrode active material may be contained in an amount of 40 to 80% by weight based on the total weight of the positive electrode active material layer. Specifically, the content of the positive electrode active material may be 40% by weight or more or 50% by weight or more, and may be 70% by weight or less or 80% by weight or less. If the content of the positive electrode active material is less than 40% by weight, the connectivity between the wet positive electrode active material layer and the dry positive electrode active material layer may be insufficient. If the content of the positive electrode active material exceeds 80 % by weight, mass transfer resistance may be increased.

In addition, the binder is a component that assists in bonding between the positive electrode active material and the electrically conductive material, and assists in bonding to the current collector. The binder may comprise at least one selected from the group consisting of styrene butadiene rubber, acrylated styrene butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinyl pyrrolidone, polyvinyl pyridine, polyvinyl alcohol, polyvinyl acetate, polyepichlorohydrin, polyphosphazene, polyacrylonitrile, polystyrene, latex, acrylic resin, phenolic resin, epoxy resin, carboxymethyl cellulose, hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may comprise at least one selected from the group consisting of styrene-butadiene rubber, polytetrafluoroethylene, carboxymethyl cellulose, polyacrylic acid, lithium polyacrylate, and polyvinylidene fluoride.

In addition, the binder may be contained in an amount of 1% by weight to 30% by weight based on the total weight of the positive electrode active material layer, and, specifically, the content of the binder may be 1% by weight or more or 3% by weight or more, and may be 15% by weight or less or 30% by weight or less. If the content of the binder is less than 1% by weight, the adhesive force between the positive electrode active material and the positive electrode current collector may be lowered. If the content of the binder exceeds 30% by weight, the adhesive force is improved, but the content of the positive electrode active material is reduced by that amount, and thus the capacity of the battery may be lowered.

In addition, the electrically conductive material is not particularly limited as long as it has excellent electrical conductivity without causing side reactions in the internal environment of the all-solid battery and without causing chemical changes in the battery. The electrically conductive material may be typically graphite or conductive carbon, and for example, as the electrically conductive material, graphite such as natural graphite, artificial graphite; carbon black such as carbon black, acetylene black, Ketjen black, Denka black, thermal black, channel black, furnace black, lamp black, thermal black; carbon-based materials whose crystal structure is graphene or graphite; electrically conductive fibers such as carbon fibers and metal fibers; carbon fluoride; metal powders such as aluminum powder and nickel powder; electrically conductive whiskers such as zinc oxide and potassium titanate; electrically conductive oxides such as titanium oxide; and electrically conductive polymers such as polyphenylene derivatives may be used alone or in combination of two or more thereof, but is not necessarily limited thereto.

The electrically conductive material may be generally contained in an amount of 0.5% by weight to 30% by weight based on the total weight of the positive electrode active material layer, and specifically, the content of the electrically conductive material may be 0.5% by weight or more or 1% by weight or more, and may be 20% by weight or less or 30% by weight or less. If the content of the electrically conductive material is too small, i.e., less than 0.5 % by weight, it is difficult to expect an effect of improving electrical conductivity or the electrochemical properties of the battery may be deteriorated. If the content of the electrically conductive material exceeds 30% by weight and thus is too large, the amount of the positive electrode active material may be relatively small, so that the capacity and energy density may be lowered. A method for incorporating the electrically conductive material to the positive electrode is not particularly limited, and a conventional method known in the art, such as coating on the positive electrode active material, may be used.

In addition, the positive electrode current collector supports the positive electrode active material layer, and serves to transfer electrons between the external conductive wire and the positive electrode active material layer.

The positive electrode current collector is not particularly limited as long as it has high electrical conductivity without causing chemical changes in the all-solid battery. For example, as the positive electrode current collector, copper, stainless steel, aluminum, nickel, titanium, palladium, sintered carbon; a copper or stainless steel surface-treated with carbon, nickel, silver, etc.; an aluminum-cadmium alloy, etc. may be used.

The positive electrode current collector may have a fine irregularity structure on the surface of the positive electrode current collector or have a three-dimensional porous structure, in order to strengthen the bonding force with the positive electrode active material layer. Accordingly, the positive electrode current collector may comprise various forms such as a film, a sheet, a foil, a mesh, a net, a porous body, a foam, and a non-woven fabric.

The positive electrode as described above may be prepared by the conventional method, and specifically, the positive electrode may be prepared by coating and drying a composition for forming the positive electrode active material layer prepared by mixing the positive electrode active material, the electrically conductive material and the binder in an organic solvent, onto the positive electrode current collector, and optionally compression-molding it onto the positive electrode current collector to improve the density of the electrode. At this time, as the organic solvent, it is preferable to use one that can uniformly disperse the positive electrode active material, the binder, and the electrically conductive material and that evaporates easily. Specifically, acetonitrile, methanol, ethanol, tetrahydrofuran, water, isopropyl alcohol and the like may be exemplified.

In the other aspect of the present disclosure, the negative electrode may comprise a negative electrode active material layer and a coating layer including the solid electrolyte, which is formed on a surface of the negative electrode active material layer. The method for preparing the coating layer in the negative electrode may be same as that of the positive electrode.

In addition, a negative electrode current collector may be further formed on the other surface of the negative electrode active material layer. The negative electrode current and the negative active material are not particularly limited as long as those are conventionally used in the all-solid battery.

The negative electrode active material layer comprises a negative electrode active material, a binder, and an electrically conductive material.

The negative electrode active material may be a material capable of reversibly intercalating or de-intercalating lithium ion ($Li^+$), a material capable of reacting with lithium ion to reversibly form a lithium-containing compound, Li-metal, or a lithium alloy.

The material capable of reversibly intercalating or de-intercalating lithium ion ($Li^+$) may be, for example, crystalline carbon, amorphous carbon or mixtures thereof. The material capable of reacting with lithium ion ($Li^+$) to reversibly form a lithium-containing compound may be, for example, tin oxide, titanium nitrate, or silicon. The lithium alloy may be, for example, an alloy of lithium (Li) and the metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be Li-metal, and specifically, may be in the form of a Li-metal thin film or Li-metal powder.

The negative electrode active material may be contained in an amount of 40 to 80% by weight based on the total weight of the negative electrode active material layer. Specifically, the content of the negative electrode active material may be 40 % by weight or more or 50 % by weight or more, and may be 70 % by weight or less or 80 % by weight or less. If the content of the negative electrode active material is less than 40% by weight, the connectivity between the wet negative electrode active material layer and the dry negative electrode active material layer may be insufficient. If the content of the negative electrode active material exceeds 80 % by weight, mass transfer resistance may be increased.

In addition, the binder is the same as described above for the positive electrode active material layer.

In addition, the electrically conductive material is the same as described above for the positive electrode active material layer.

In addition, the negative electrode current collector is not particularly limited as long as it has electrical conductivity without causing chemical change in the battery, and for example, the negative electrode current collector may be copper, stainless steel, aluminum, nickel, titanium, sintered carbon; copper or stainless steel surface-treated with carbon, nickel, titanium, silver, etc.; or aluminum-cadmium alloy. In addition, the negative electrode current collector may be used in various forms, such as a film having a fine irregularity structure on its surface, a sheet, a foil, a net, a porous body, a foam, and a non-woven fabric, as in the positive electrode current collector.

The manufacturing method of the negative electrode is not particularly limited, and may be manufactured by forming a negative electrode active material layer on a negative electrode current collector using a layer or film formation method commonly used in the art. For example, a method such as pressing, coating, or vapor deposition may be used. Also, a case where a thin film of a metal lithium is formed on a metal plate by initial charging after assembling the battery without a lithium thin film on the negative electrode current collector is also comprised in the negative electrode of the present disclosure.

In addition, the other aspect of the present disclosure relates to an all-solid battery comprising the electrode for the all-solid battery.

In one or more of the positive electrode and the negative electrode, the coating layer comprising the above solid electrolyte may be formed therein.

The solid electrolyte may be applied in the all-solid battery in the form of coating layer(s) formed in the positive electrode and/or the negative electrode to improve performance and lifespan properties of all-solid state batteries because the solid electrolyte exhibits both excellent ionic conductivity and excellent electrical conductivity.

Hereinafter, preferred examples of the present disclosure will be described to facilitate understanding of the present disclosure. It will be apparent to those skilled in the art, however, that the following examples are only illustrative of the present disclosure and various changes and modifications can be made within the scope and spirit of the present disclosure, and that such variations and modifications are within the scope of the appended claims.

In the following Examples and Comparative Examples, solid electrolytes were prepared according to the weight ratio of the conducting polymer and the lithium salt as shown in Table 1 below.

[Table 1]

|  | | Solid electrolyte | | |
| --- | --- | --- | --- | --- |
|  | | Conducting polymer | Lithium salt | Weight ratio (conducting polymer : lithium salt) |
|  | Example 1 | PEDOT:PSS | LiTFSI | 5:1 |
|  | Example 2 | PEDOT:PSS | LiTFSI | 1:1 |
|  | Example 3 | PEDOT:PSS | LiTFSI | 1:2 |
|  | Example 4 | PEDOT:PSS | $LiNO_3$ | 5:1 |
|  | Example 5 | PEDOT:PSS | LiOH | 5:1 |
|  | Example 6 | PEDOT:PSS | LiFSI | 1:2 |
|  | Example 7 | polypyrrole | LiTFSI | 2:1 |
|  | Example 8 | polypyrrole | LiTFSI | 1:2 |

(continued)

| | Solid electrolyte | | |
|---|---|---|---|
| | Conducting polymer | Lithium salt | Weight ratio (conducting polymer : lithium salt) |
| Example 9 | PEDOT:PSS | LiTFSI | 1:3 |
| Example 10 | PEDOT:PSS | LiTFSI | 10:1 |
| Comparative Example 1 | PEO | LiTFSI | 10:1 |
| Comparative Example 2 | PEDOT:PSS | - | - |
| Comparative Example 3 | PEDOT:PSS:PEO | LiTFSI | 1:1 |

**Example 1**

5 g of solution of PEDOT:PSS, which is a conducting polymer (Sigma-Aldrich, 1.1 wt%), and 0.011 g of LiTFSI, which is lithium salt, were stirred for 12 hours to obtain a mixed solution, and then it was coated with a doctor blade on stainless steel foil to form a coating layer. The weight ratio of the conducting polymer and the lithium salt ((PEDOT:PSS): LiTFSI) is 5:1. The weight ratio of PEDOT and PSS is 1: 2.5.

Thereafter, the solvent in the mixed solution was removed by vacuum drying performed at 100°C for one day to obtain a solid electrolyte film.

**Example 2**

A solid electrolyte film was prepared in the same manner as in Example 1, except that the weight ratio of the conducting polymer and the lithium salt ((PEDOT:PSS): LiTFSI) was 1:1.

**Example 3**

A solid electrolyte film was prepared in the same manner as in Example 1, except that the weight ratio of the conducting polymer and the lithium salt ((PEDOT:PSS): LiTFSI) was 1:2.

**Example 4**

A solid electrolyte film was prepared in the same manner as in Example 1, except that $LiNO_3$ was used as the lithium salt and the weight ratio of the conducting polymer and the lithium salt ((PEDOT:PSS): LiNOs) was 5:1.

**Example 5**

A solid electrolyte film was prepared in the same manner as in Example 1, except that LiOH was used as the lithium salt and the weight ratio of the conducting polymer and the lithium salt ((PEDOT:PSS): LiOH) was 5:1.

**Example 6**

A solid electrolyte film was prepared in the same manner as in Example 1, except that LiFSI was used as the lithium salt and the weight ratio of the conducting polymer and the lithium salt ((PEDOT:PSS): LiFSI) was 1:2.

**Example 7**

A solid electrolyte film was prepared in the same manner as in Example 1, except that polypyrrole was used as the conducting polymer and the weight ratio of the conducting polymer and the lithium salt (polypyrrole: LiTFSI) was 2:1.

**Example 8**

A solid electrolyte film was prepared in the same manner as in Example 1, except that polypyrrole was used as the conducting polymer and the weight ratio of the conducting polymer and the lithium salt (polypyrrole: LiTFSI) was 2:1.

**Example 9**

A solid electrolyte film was prepared in the same manner as in Example 1, except that the weight ratio of the conducting polymer and the lithium salt ((PEDOT:PSS): LiTFSI) was 1:3.

**Example 10**

A solid electrolyte film was prepared in the same manner as in Example 1, except that the weight ratio of the conducting polymer and the lithium salt ((PEDOT:PSS): LiTFSI) was 10:1.

**Comparative Example 1**

A solid electrolyte film was prepared in the same manner as in Example 1, except that polyethylene oxide (PEO) was used as a polymer instead of PEDOT:PSS.

**Comparative Example 2**

A solid electrolyte film was prepared in the same manner as in Example 1, except that a lithium salt was not used.

**Comparative Example 3**

A solid electrolyte film was prepared in the same manner as in Example 1, except that the weight ratio of a polymer and the lithium salt ((PEDOT:PSS and PEO): LiTFSI) was 1:1, and the (PEDOT: PSS) : PEO was a mixed polymer obtained by mixing PEDOT:PSS and PEO in a weight ratio of 7:3.

**Experimental Example 1: Evaluation of physical property of solid electrolyte**

The solid electrolyte films prepared in Examples and Comparative Examples were tested for ionic conductivity and electrical conductivity as follows.

(1) Ionic conductivity

A coin cell was formed by contacting the solid electrolyte film with a stainless steel plate, and then, an alternating voltage was applied at room temperature. A measurement frequency was set in an amplitude range of 500 KHz to 20 MHz, and impedance was measured using VMP3 from BioLogic company. Using Equation 1 below, the resistance of the solid electrolyte film was obtained from the intersection (Rb) where the semicircle or straight line of the measured impedance trajectory meets the real axis, and the ionic conductivity (σ) of the solid electrolyte film was calculated from the width and thickness of the sample.

[Equation 1]

$$\sigma \ (S \cdot cm^{-1}) = \frac{1}{R_b} \frac{t}{A}$$

σ: Ionic conductivity
Rb: Intersection with the real axis of the impedance trajectory
A: Width of the sample
t: Thickness of the sample

(2) Electrical conductivity

For the coin cell having the same structure as the coin cell used to measure ionic conductivity, cyclic voltammetry was measured (-0.1V to 0.1V), and electrical conductivity(S, S/m) was calculated using Equation 2 below.

[Equation 2]

S/ = A/V * Film thickness/film dimension

A: Current
V: Voltage
Film thickness: Thickness of sample
Film dimension: Area of sample

The ionic and electrical conductivities of the solid electrolyte films prepared in the Examples and Comparative Examples are shown in Table 2.

[Table 2]

|  | Thickness ($\mu$m) | Ionic conductivity (S/cm) | Electrical conductivity (S/cm) |
| --- | --- | --- | --- |
| Example 1 | 20 | $3.08 \times 10^{-6}$ | $3.411 \times 10^{-6}$ |
| Example 2 | 14 | $6.33 \times 10^{-6}$ | $5.782 \times 10^{-6}$ |
| Example 3 | 22 | $2.98 \times 10^{-5}$ | $2.263 \times 10^{-5}$ |
| Example 4 | 23 | $4.40 \times 10^{-6}$ | $1.087 \times 10^{-6}$ |
| Example 5 | 55 | $6.52 \times 10^{-6}$ | $1.368 \times 10^{-6}$ |
| Example 6 | 13 | $1.24 \times 10^{-5}$ | $2.070 \times 10^{-5}$ |
| Example 7 | 46 | $2.54 \times 10^{-6}$ | $1.811 \times 10^{-7}$ |
| Example 8 | 48 | $7.96 \times 10^{-6}$ | $2.264 \times 10^{-7}$ |
| Example 9 | 34 | $2.76 \times 10^{-7}$ | $1.225 \times 10^{-7}$ |
| Example 10 | 16 | $9.62 \times 10^{-7}$ | $9.884 \times 10^{-7}$ |
| Comparative Example 1 | 43 | $9.26 \times 10^{-8}$ | $8.778 \times 10^{-11}$ |
| Comparative Example 2 | 11 | - | $2.716 \times 10^{-6}$ |
| Comparative Example 3 | 45 | $1.37 \times 10^{-7}$ | $9.362 \times 10^{-11}$ |

As shown in Table 2, for Examples 1 to 10, the solid electrolyte films containing the conducting polymer and lithium salt in an appropriate weight ratio have excellent ionic conductivity and electrical conductivity.

Also, as shown for Examples 1 to 3, for which the same conducting polymer and lithium salt were used, the ionic conductivity and electrical conductivity increased simultaneously as the amount of the lithium salt increased.

However, when the content of lithium salt was excessively increased compared to the conducting polymer, the ionic conductivity and electrical conductivity decreased as seen in Example 9.

In addition, when the amount of the conducting polymer was excessively increased compared to lithium salt, the ionic conductivity and electrical conductivity also decreased as seen in Example 10.

In addition, when PEO was used instead of the conducting polymer, as in Comparative Example 1, the ionic conductivity and electrical conductivity were significantly reduced.

In addition, when lithium salt was not used, as in Comparative Example 2, it was impossible to measure the ionic conductivity itself.

In addition, even if the conducting polymer and PEO were used together, as in Comparative Example 3, the ionic conductivity and electrical conductivity were decreased.

Although the present disclosure has been described above with limited examples and drawings, the present disclosure is not limited thereto, and various modifications and variations are possible, by those of ordinary skill in the art to which the present disclosure belongs, within the scope of equivalents to the technical spirit of the present disclosure and the claims to be described below.


**Claims**

1.   A solid electrolyte comprising:

     a conducting polymer having mixed conducting characteristics; and
     a lithium salt,

wherein the mixed conducting characteristics include ionic conductivity and electrical conductivity.

2. The solid electrolyte according to claim 1, wherein the conducting polymer comprises one or more selected from the group consisting of poly(3,4-ethylenedioxythiophene):poly(styrenesulfonate)(PEDOT:PSS), polyacetylene, poly(*para*-phenylene), poly(*para*-phenylene sulfide), polythiophene, polypyrrole, polyisothianaphtalene, poly(*para*-phenylene vinylene), polyaniline, and poly(3,4-ethylenedioxythiophene).

3. The solid electrolyte according to claim 1, wherein the lithium salt comprises one or more selected from the group consisting of LiTFSI(lithium bis(trifluoromethanesulphonyl)imide), LiFSI(lithium bis(fluorosulfonyl)imide), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN, $LiC(CF_3SO_2)_3$, $(CF_3SO_2)_2NLi$ and $(FSO_2)_2NLi$.

4. The solid electrolyte according to claim 1, wherein the solid electrolyte comprises 5 to 300 parts by weight of the lithium salt relative to 100 parts by weight of the conducting polymer.

5. The solid electrolyte according to claim 1, wherein the solid electrolyte comprises 100 to 300 parts by weight of the lithium salt relative to 100 parts by weight of the conducting polymer.

6. The solid electrolyte according to claim 1, wherein the solid electrolyte has a form of a matrix of the conducting polymer and the lithium salt dissociated inside the matrix.

7. The solid electrolyte according to claim 1, wherein the solid electrolyte has a form of a solid electrolyte film.

8. The solid electrolyte according to claim 1, wherein the solid electrolyte has a thickness of from 10 to 60 $\mu$m.

9. A method for preparing a solid electrolyte according, comprising:

mixing a conducting polymer, a lithium salt, and a solvent to prepare a mixed solution;
coating the mixed solution on a substrate to form a coating layer; and
drying the coating layer.

10. The method according to claim 9, wherein the coating is carried out by bar coating, roll coating, spin coating, slit coating, die coating, blade coating, comma coating, slot die coating, lip coating, or solution casting.

11. The method according to claim 9, wherein the drying is carried out at 300°C or less.

12. The method according to claim 9, wherein the substrate is stainless steel, polyethylene terephthalate film, polytetrafluoroethylene film, polyethylene film, polypropylene film, polybutene film, polybutadiene film, vinyl chloride copolymer film, polyurethane film, ethylene-vinyl acetate, ethylene-propylene copolymer film, ethylene-ethyl acrylate copolymer film, ethylene-methyl acrylate copolymer film, or polyimide film.

13. The method according to claim 9, wherein the solvent is one or more selected from the group consisting of dimethylsulfoxide (DMSO), isopropyl alcohol, N-methylpyrrolidone (NMP), acetone, xylene, N,N-Dimethylmethanamide (DMF), benzene, tetrahydrofuran (THF), and water.

14. An electrode for an all-solid battery, wherein the electrode includes a coating layer comprising the solid electrolyte of claim 1 formed thereon.

15. The electrode according to claim 14, wherein the electrode is a positive electrode or a negative electrode.

16. An all-solid battery comprising the electrode of claim 13.

FIG. 1

## INTERNATIONAL SEARCH REPORT

| International application No. |
|---|
| **PCT/KR2022/019898** |

| A. | CLASSIFICATION OF SUBJECT MATTER |
|---|---|

**H01M 10/0565**(2010.01)i

According to International Patent Classification (IPC) or to both national classification and IPC

| B. | FIELDS SEARCHED |
|---|---|

Minimum documentation searched (classification system followed by classification symbols)

H01M 10/0565(2010.01); C08K 3/24(2006.01); H01M 10/052(2010.01); H01M 10/056(2010.01); H01M 10/40(2006.01); H01M 10/42(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고체 전해질(solid electrolyte), 고분자(polymer), 리튬염(lithium salt), 이온 전도도(ionic conductivity), 전기 전도도(electric conductivity)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2020-0122904 A (LG CHEM, LTD.) 28 October 2020 (2020-10-28)<br>See claims 1, 5, 6, 9 and 11; and paragraphs [0054], [0056], [0061], [0064]-[0066], [0068], [0093] and [0094]. | 1-16 |
| Y | KIM, J.-M. et al. Conducting polymer-skinned electroactive materials of lithium-ion batteries: ready for monocomponent electrodes without additional binders and conductive agents. ACS applied materials & interfaces. 2014, vol. 6, no. 15, pp. 12789-12797.<br>See abstract; and pages 12789 and 12790. | 1-16 |
| A | KR 10-2315399 B1 (LG CHEM, LTD. et al.) 20 October 2021 (2021-10-20)<br>See claims 1 and 3-10. | 1-16 |
| A | JP 2000-268871 A (HITACHI CHEM. CO., LTD.) 29 September 2000 (2000-09-29)<br>See entire document. | 1-16 |
| A | KR 10-2018-0093064 A (NANOTEK INSTRUMENTS, INC.) 20 August 2018 (2018-08-20)<br>See entire document. | 1-16 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 March 2023** | **15 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 329 035 A1

| INTERNATIONAL SEARCH REPORT | International application No. |
| Information on patent family members | PCT/KR2022/019898 |

| Patent document cited in search report | | | Publication date (day/month/year) | Patent family member(s) | | | Publication date (day/month/year) |
|---|---|---|---|---|---|---|---|
| KR | 10-2020-0122904 | A | 28 October 2020 | CN | 113892205 | A | 04 January 2022 |
| | | | | EP | 3955362 | A1 | 16 February 2022 |
| | | | | EP | 3955362 | A4 | 16 February 2022 |
| | | | | JP | 2022-529975 | A | 27 June 2022 |
| | | | | US | 2022-0200097 | A1 | 23 June 2022 |
| | | | | WO | 2020-214010 | A1 | 22 October 2020 |
| KR | 10-2315399 | B1 | 20 October 2021 | CN | 111033835 | A | 17 April 2020 |
| | | | | EP | 3664199 | A1 | 10 June 2020 |
| | | | | EP | 3664199 | A4 | 11 November 2020 |
| | | | | JP | 2020-532070 | A | 05 November 2020 |
| | | | | JP | 6966634 | B2 | 17 November 2021 |
| | | | | KR | 10-2019-0037019 | A | 05 April 2019 |
| | | | | US | 2020-0350586 | A1 | 05 November 2020 |
| | | | | WO | 2019-066219 | A1 | 04 April 2019 |
| JP | 2000-268871 | A | 29 September 2000 | | None | | |
| KR | 10-2018-0093064 | A | 20 August 2018 | CN | 108475808 | A | 31 August 2018 |
| | | | | CN | 108475808 | B | 22 March 2022 |
| | | | | JP | 2019-505961 | A | 28 February 2019 |
| | | | | JP | 7008024 | B2 | 25 January 2022 |
| | | | | US | 10497968 | B2 | 03 December 2019 |
| | | | | US | 11374254 | B2 | 28 June 2022 |
| | | | | US | 2017-0194663 | A1 | 06 July 2017 |
| | | | | US | 2019-036165 | A1 | 31 January 2019 |
| | | | | WO | 2017-120133 | A1 | 13 July 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20210174993
- KR 20220169870

- US 20210050596